# EUROPÄISCHE PATENTSCHRIFT

(11) **EP 1 780 176 B1**
(45) Veröffentlichungstag und Bekanntmachung des Hinweises auf die Patenterteilung: **15.04.2009**
(21) Anmeldenummer: 06121792.3
(22) Anmeldetag: 05.10.2006
(51) Int. Cl.: C02F 1/34

(54) **Entkeimung durch Kavitation**
Disinfection by cavitation
Désinfection par cavitation

(30) Priorität: 25.10.2005 DE 102005051072
(43) Veröffentlichungstag der Anmeldung: 02.05.2007
(73) Patentinhaber: Wagner, Manfred, 84036 Kumhausen (DE); Locher, Manfred Lorenz, 89597 Munderkingen (DE); Huymann, Elmar, 6020 Innsbruck (AT)
(72) Erfinder: Huymann, Elmar, 6020 Innsbruck (AT)
(74) Vertreter: Strych, Werner Maximilian Josef

(56) Entgegenhaltungen:
- WO-A-02/38512
- DE-A1- 10 310 442
- US-B1- 6 200 486
- JYOTI K K ET AL: "Effect of cavitation on chemical disinfection efficiency" WATER RESEARCH, ELSEVIER, AMSTERDAM, NL, Bd. 38, Nr. 9, Mai 2004 (2004-05), Seiten 2248-2257, XP004508314 ISSN: 0043-1354

## Beschreibung

### I. Anwendungsgebiet

Die Erfindung betrifft ein Entkeimungsverfahren.

### II. Technischer Hintergrund

Vor allem flüssige, jedenfalls fließfähige, Medien, beispielsweise Wasser und Abwasser, sind häufig verkeimt, also von lebenden Mikroorganismen wie Viren oder Bakterien verunreinigt, die entfernt oder zumindest deaktiviert werden müssen.

Ein typischer Entkeimungsfall sind Bakterien in Trinkwasser oder Brauchwasser.

Die Reinigung wurde bisher auf unterschiedliche Art und Weise je nach Anwendungsfall und vorhandenen Randbedingungen vollzogen:
Eine chemische Abtötung der Mikroben erfolgt ja häufig durch Zugabe von chemischen Substanzen, die diese lebenden Mikroorganismen zerstören, beispielsweise von Chlor oder Ozon in einer ausreichend hohen Konzentration.

Dabei besteht eines der Probleme darin, dass trotz nie hundertprozentiger, vollständiger Durchmischung sicher gestellt werden muss, dass an jeder Stelle des Mediums eine ausreichende Mindestkonzentration der zugegebenen Chemikalie vorhanden ist, was häufig dazu führt, dass an anderen Stellen eine so hohe Konzentration gegeben ist, dass dadurch nachteilige Wirkungen für den Benutzer eintreten.

Eine andere gängige Möglichkeit besteht in der Entfernung der Mikroorganismen aus dem Medium mittels Kaltverfahren, z. B. mittels Filtration. Der Nachteil besteht darin, dass derart feine Filter einen sehr hohen Herstellungs- und vor allem Wartungsaufwand erfordern, da sie ohne ausreichende Wartung sehr schnell zusetzen und damit dicht und unbrauchbar werden.

Eine weitere Möglichkeit besteht in der Abtötung der lebenden Mikroorganismen durch Wärme und/oder Druck, wodurch jedoch zum einen ein sehr hoher Energiebedarf entsteht und zum anderen - je nach Art des Mediums - durch die notwendige hohe Temperatur bzw. hohen Druck erwünschte chemische oder physikalische oder geschmackliche Eigenschaften des Mediums nachteilig beeinflusst werden.

Auf der anderen Seite ist der Kavitationseffekt bekannt, der darauf beruht, dass in einer schnell dahinströmenden Flüssigkeit Gasblasen erzeugt und anschließend wieder zum Platzen gebracht werden.

Bei der hydrodynamischen Kavitation erfolgt dies durch regionale hohe Druckunterschiede in der dahinströmenden Flüssigkeit, meist hervorgerufen durch starke Veränderungen der Fließgeschwindigkeit aufgrund Querschnittsverengungen oder -aufweitungen.

Daneben sind die Ultraschallkavitation sowie Kavitation durch lokales Einbringen von Energie, beispielsweise mittels eines Laserstrahls, bekannt.

Die Erzeugung der hydrodynamischen Kavitationsblasen geschieht in einer strömenden Flüssigkeit durch einen Abfall des statischen Druckes unter den Dampfdruck der Flüssigkeit, wodurch sich dampfgefüllte Gasblasen bilden, z. B. aufgrund einer Stromeinengung.

Wenn anschließend der statische Druck durch eine Aufweitung des Strömungsquerschnitts wieder zunimmt und der statische Druck wieder den Dampfdruck übersteigt, brechen die Gasblasen zusammen.

Der statische Druck wird bei Wasser null oder negativ, wenn die Strömungsgeschwindigkeit einen bestimmten, von Umgebungsbedingungen abhängigen Wert, z. B. an den Abrisskanten etwa 14 m/sec., überschreitet.

Die Einengung und anschließende Aufweitung des Strömungsquerschnitts kann erreicht werden, indem in einer Durchflusskammer ein Hinderniskörper angeordnet wird, wobei der verbleibende Spalt z. B. zwischen Hinderniskörper und umgebendem Gehäuse der Durchflusskammer die Engstelle bildet.

Durch mehrfache Anordnung solcher Hinderniskörper hintereinander, aus Platzgründen vorzugsweise in Form von quer zur Strömungsrichtung stehenden Scheiben, wird der Kavitationseffekt vervielfacht, besondern indem in Strömungsrichtung die Ringspaltfläche von einer Scheibe zur nächsten jeweils abnimmt.

Zusätzlich entstehen dabei zu dem ersten, sich im Ringspaltbereich ausbildenden, Kavitationsfeld ergänzende Kavitationsfelder in den durchströmbaren Hohlräumen zwischen den Hinderniskörpern, und durch die räumliche Überlagerung der einzelnen Kavitationsfelder entsteht ein so genanntes Super-Kavitationsfeld, was eine Vervielfachung der Kavitationswirkung jedes einzelnen Kavitationsfeldes bewirkt.

Dabei ist es bisher bekannt, die Verkleinerung der Ringspaltfläche in Durchströmungsrichtung zu bewirken durch
- in Strömungsrichtung größer werdende, in der Gesamtheit einen Kegelstumpf bildende, Abfolge von Scheiben als Hinderniskörper in einem umgebenden zylindrischen Gehäuse als Durchflusskammer, z. B. gemäß DE 44 33 744 oder
   - in einem ebenfalls konischen Gehäuse als Durchflusskammer, jedoch mit geringerer Konizität als die Konizität des durch die Hindernisse gebildeten Kegels bzw. Kegelstumpfes, so dass dennoch eine Verringerung der Ringspaltfläche in Durchströmungsrichtung vorliegt, z. B. gemäß EP 1 280 598, wodurch ein so genanntes hydrodynamisches Super-Kavitationsfeld erzeugt wird.

Beispielsweise ist es bekannt, den auf diese Art und Weise erzeugten Kavitationseffekt zum Mischen einer Suspension oder Emulsion mit geringem Aufwand und ohne mechanisch angetriebene Teile zu benutzen.

Wenn dieses Zusammenbrechen einer großen Anzahl von Blasen, der so genannten Kavitationsblasen, in der Nähe der Grenzfläche zwischen zwei Phasenbereichen, also etwa großen Öltröpfchen in Wasser, geschieht, wird dadurch die zweite Komponente, in diesem Fall die Öltröpfchen, in kleinere Einheiten aufgeteilt und dadurch eine sehr feine Vermischung der beiden Komponenten und damit eine sehr stabile Suspension oder Emulsion erzeugt.

Darüber hinaus sind aus der WO 0238512 A1 als auch der US 6200486 Kavitatoren bekannt, mittels der im hindurchströmenden Medium Mikroben durch Kaviation zerstört werden und zwar im einen Fall durch Ausrichten eines Düsenstrahles des Mediums auf eine entgegengerichtete Prallfläche, im anderen Fall ebenfalls durch eine mehrfache Ausrichtung von Düsen auf Prallplatten, wofür der ursprüngliche Hauptstrom in mehrere Teilströme in verschiedene Richtungen umgeleitet und aufgeteilt wird und auch danach noch eine mehrfache Umlenkung erfährt.

Aus der DE 103 10 442 ist dagegen ein Kavitator bekannt, der in Hauptströmungsrichtung hintereinander mehrere Hinderniskörper in einem umgebenden Gehäuse aufweist und bei dem lediglich auf der Frontfläche des ersten Hinderniskörpers ein Strahl des Mediums auftrifft.

Diese Kavitatorbauform wird jedoch lediglich zum Mischen und Entmischen von z. B. Suspensionen benutzt.

### III. Darstellung der Erfindung

### a) Technische Aufgabe

Es ist daher die Aufgabe gemäß der Erfindung, Mikroorganismen, insbesondere lebende Mikroorganismen, die in einem fließfähigen Medium, insbesondere einer Flüssigkeit, vorhanden sind, mit vergleichsweise geringen Energieaufwand auf Dauer zu deaktivieren, ohne die übrigen Eigenschaften des Mediums negativ zu beeinflussen.

Im Folgenden wird an Stelle von "fließfähigem Medium" immer von einer "Flüssigkeit" gesprochen, ohne die Erfindung hierauf zu begrenzen.

### b) Lösung der Aufgabe

Das Ziel besteht darin, dass die erzeugten Kavitationsblasen unter einem so hohen Druck wieder zerplatzen, dass dadurch die Zellwände der in der Nähe der platzenden Blase oder auch in der platzenden Blase vorhandenen Mikroben aufreißen, und dadurch die Mikrobe abgetötet wird. Entsprechend stark müssen zum einen die an den Hindernissen auftretenden Druckunterschiede sein und vorzugsweise entsprechend hoch muss das gesamte Druckniveau liegen, auf dem der Kavitator betrieben wird.

Diese Aufgabe wird durch das Verfahren nach Anspruch 1 gelöst . Vorteilhafte Ausführungsformen ergeben sich aus den Unteransprüchen.

Durch die Ausbildung des ersten Hinderniskörpers als Prallplatte, also mit einer in Strömungsrichtung ein möglichst starkes Hindernis bietende, Prallfläche, die eben oder sogar gegen die anströmende erste Komponente konkav ausgebildet ist, kann allein schon durch den Aufprall eine teilweise Zerstörung der Mikroben erreicht werden.

Der Aufprall ist deswegen besonders stark mischend, weil über den ersten Hinderniskörper hinaus, der Strömungsrichtung der ersten Komponente entgegen ragend, keine Halterung der Strömung entgegensteht, denn dieser erste wie auch die folgenden Hinderniskörper können an einer insbesondere in Form einer zentralen Achse ausgebildeten Halterung, die sich von der Gegenrichtung, also entgegen der Strömungsrichtung, annähert, im Zentrum der Durchflusskammer gehalten werden.

Indem in Strömungsrichtung nach der Eingangsöffnung zunächst eine Querschnittsverengung und anschließend eine Querschnittsaufweitung, beide vorzugsweise jeweils konusförmig, durchläuft, wird durch die Querschnittsaufweitung ein Unterdruck in der Durchflusskammer vor der Prallplatte erzeugt, der die Funktion verbessert.

Ein hinsichtlich seiner Fläche kleiner werdender Durchflussspalt gemessen in Hauptströmungsrichtung, kann besonders in Kombination mit dem Aufprall der ersten Komponente auf dem ersten Hinderniskörper dadurch erzielt werden, dass die Hinderniskörper in ihrem Querschnitt in Hauptströmungsrichtung abnehmen und damit auch die Länge des Ringspalters um die Hinderniskörper herum, und damit einen in Strömungsrichtung schmaler werdenden Konus bilden.

Dabei kann die Wandung des umgebenden Gehäuses parallel zu dem Konus der Hinderniskörper verlaufen oder sogar stärker kegelig ausgebildet sein (größerer Winkel an der Kegelspitze), was den Effekt der abnehmenden Ringfläche noch vergrößert. Aber auch eine schwächere Kegelform (geringerer Winkel) an der Spitze des Kegels des Gehäuses ist möglich, was den durch die Kegelform der Hinderniskörper bewirkten Effekt etwas abschwächt.

Die Wirkung der Querschnittsaufweitung und der Verwirbelung ist umso besser, wenn zwischen der Querschnittsaufweitung und der Prallplatte eine Strecke mit etwa konstantem Querschnitt des Gehäuses liegt, um auf dieser Strecke die Druckverhältnisse über den Querschnitt stabilisieren zu lassen.

Die Flüssigkeit wird über eine Ausgangsöffnung abgeführt, die vorzugsweise radial, insbesondere in Form eines radialen Ringspaltes, aus dem Gehäuse herausfließt.

Die Effizienz der Vorrichtung, die in der Regel in eine bestehende Rohrleitung eingesetzt wird, lässt sich steigern, indem - beispielsweise in Abhängigkeit der Fließgeschwindigkeit im zuführenden Rohr, der Viskosität der einzelnen Komponenten und deren Mischbarkeit - die Hinderniskörper axial verstellt werden, und zwar in ihrem Abstand zueinander und/oder gruppenweise oder gar insgesamt relativ zum umgebenden Gehäuse, wodurch bei einem kegelförmigen Gehäuse auch das Absolutmaß der Ringspaltflächen verändert wird.

Weiterhin ist es vorteilhaft, wenn die Hinderniskörper zum einen plattenförmig sind, um die Herstellung zu vereinfachen und zu verbilligen, und insbesondere so dünn ausgebildet sind, dass sie an ihren freien Kanten in Strömungsrichtung schwingen können, was das Erzeugen und Abreißen von Dampfblasen erleichtert.

Ebenso wird diese Entwicklung erleichtert durch eine möglichst scharfkantige Ausbildung der Abrisskanten der Hinderniskörper, also z. B. der Platten.

Der Durchflussspalt zwischen Hinderniskörpern und Gehäuse kann bei z. B. runden Hinderniskörpern, also Scheiben, der radiale Spalt zwischen der freien außen umlaufenden Kante der Scheiben und dem umgebenden Gehäuse sein.

Es sind jedoch auch andere Ausbildungen möglich, bei denen beispielsweise die plattenförmigen Hinderniskörper an ihrem radial äußersten Punkt durchaus das Gehäuse erreichen und dort mit diesem verbunden sind, aber beispielsweise nicht über den gesamten Umfang, sondern nur segmentweise, und in den Segmenten dazwischen radial verlaufende Schlitze oder Spalte vorhanden sind, die in axialer Richtung zueinander von einem Hinderniskörper zum nächsten versetzt sein können und als Durchflussspalte dienen.

Die Bildung von Dampfblasen und damit das Auftreten der Kavitation wird ferner gefördert durch eine möglichst große Länge der Abrisskanten.

Zu diesem Zweck können gerade bei scheibenförmigen Hinderniskörpern mit dem Umfang als Abrisskante diese durch gewellte oder gezackte Ausbildung in ihrer Länge vergrößert werden, wobei der ungerade Verlauf entweder bei Betrachtung in Axialrichtung oder in Querrichtung hierzu oder in beide Richtungen vorhanden sein kann.

Falls die ungerade, also gewellte oder gezackte, Form sich bei Betrachtung in Axialrichtung erschließt, kann auch das umgebende Gehäuse - betrachtet in axialer Richtung - analog ausgebildet sein, so dass über den gesamten Umfang ein jeweils gleich bleibender Querschnitt zwischen Gehäuse und Abrisskante eingehalten wird, oder das Gehäuse ist innen durchgehend rund ausgebildet, so dass in Umfangsrichtung die Abstände zur Abrisskante wechseln.

Wenn zusätzlich die Vorrichtung so gestaltet ist, dass in deren Betrieb bestimmte strömungstechnische Bedingungen eingehalten werden, ist der Kavitationseffekt besonders ausgeprägt:
So sollte die Querschnittsverengung nach der Eingangsöffnung so bemessen sein, dass die Fließgeschwindigkeit an der engsten Stelle der Querschnittsverengung der Fließgeschwindigkeit im Durchflussspalt des letzten Hinderniskörpers entspricht. Demgegenüber sollte die Fließgeschwindigkeit dahinter, am Auslass nach dem letzten Hinderniskörper, etwas höher liegen als im Durchflussspalt beim letzten Hinderniskörper.

Eine besonders einfache Ausführungsform ist dann gegeben, wenn als Hinderniskörper runde Scheiben mit in Strömungsrichtung gleich bleibendem Durchmesser verwendet werden, und der abnehmende Ringspalt erzielt wird, indem sich das Gehäuse in Hauptdurchflussrichtung verjüngt. Allerdings ist dieser Effekt weniger stark als bei kegelförmig kleiner werdenden Hinderniskörpern, insbesondere Scheiben.

Besonders vorteilhaft ist weiterhin eine starke Querschnittsverengung nach der Eingangsöffnung, so dass sich von der Eingangsöffnung bis zur engsten Stelle der Querschnittsverengung die Fließgeschwindigkeit um den Faktor 9 - 13, insbesondere um den Faktor 10 - 12, insbesondere um den Faktor 10,5 - 11,5, erhöht.

Vorteilhaft ist ferner, wenn die Hinderniskörper zueinander und/oder zu dem umgebenden Gehäuse so positioniert und dimensioniert werden, dass sich die Fließgeschwindigkeit im Durchflussspalt beim letzten Hinderniskörper in Strömungsrichtung verglichen zu dem Durchgangsspalt beim ersten Hinderniskörper um den Faktor 1,8 - 2,5, insbesondere um 2,0 - 2,3, erhöht.

Gleiches gilt, wenn erreicht wird, dass die Fließgeschwindigkeit vom einen zum nächsten Hinderniskörper im jeweiligen Durchgangsspalt jeweils um den Faktor 1,1 - 1,4 zunimmt.

Als optimales Verhältnis zwischen einfacher Bauform und hoher Effizienz der Vorrichtung hat sich eine Anzahl von Hinderniskörpern zwischen 3 und 10, insbesondere zwischen 5 und 7, herausgestellt.

Wenn bei Scheiben aus Metall, insbesondere aus Edelstahl, die Dicke zwischen 1 und 4 mm, insbesondere zwischen 2 und 3 mm, beträgt, ist die Herstellung sehr einfach, insbesondere kann dabei noch eine im rechten Winkel zur Hauptebene der Platten stehende Schneidkante verwendet werden, und die Platten sind dennoch ausreichend elastisch.

Der axiale Abstand von Mitte zu Mitte zweier benachbarter Hinderniskörper sollte dabei zwischen dem Zweifachen und dem Siebenfachen der Dicke der Platten betragen, insbesondere das Dreifache bis Fünffache.

Die radiale Breite des Ringspaltes zwischen dem Außenumfang der plattenförmigen Hinderniskörper und dem Gehäuse sollte dabei zwischen 1 und 5 mm, insbesondere zwischen 1,5 und 3,8 mm, betragen.

Darüber hinaus hat sich eine axiale Länge der Strecke mit konstantem Querschnitt des Gehäuses zwischen der Querschnittsaufweitung und der Prallplatte von einem 0,7 - 1,4-fachen des Durchmessers nach der Querschnittsaufweitung, also des konstanten Querschnitts, als vorteilhaft erwiesen.

Ebenso sollte der innere freie Durchmesser nach der Querschnittsaufweitung, also auf der Strecke mit konstantem Querschnitt zwischen dem 0,9-fachen und 2,0-fachen, insbesondere zwischen dem 0,9-fachen und 1,1-fachen, des freien Querschnitts der zu- und/oder abführenden Rohrleitung betragen.

Vorzugsweise wird dabei vor allem der erste, als Prallplatte ausgebildete, Hinderniskörper, ggf. auch der zweite Hinderniskörper, eine wesentlich größere Erstreckung in axialer Richtung aufweisen als die übrigen, eher plattenförmigen Hinderniskörper. Diese in axialer Richtung dickeren ersten Hinderniskörper weisen vorzugsweise an ihrem Außenumfang eine ringförmig umlaufende konkave Einbuchtung auf, so dass sie jeweils zwei ringförmig umlaufende, axial beabstandete Abrisskanten besitzen, wobei die Einbuchtung mindestens der Größe der radialen Breite des Ringspaltes entsprechen sollte, vorzugsweise einem Vielfachen dieses Spaltes.

Die Abrisskanten wirken dann besonders gut, wenn sie im Querschnitt betrachtet einen spitzen Winkel von weniger als 60°, insbesondere weniger als 50° oder gar 45°, besitzen und damit besonders scharf sind.

Dabei soll bevorzugt die in Hauptströmungsrichtung erste Abrisskante des ersten Hinderniskörpers noch im Bereich des konstanten Innendurchmessers des Gehäuses liegen, und nur die zweite sowie alle folgenden Abrisskanten sich bereits im axialen Bereich des sich verjüngenden Innendurchmessers des Gehäuses liegen.

Insgesamt sollte die Vorrichtung so dimensioniert und gestaltet sein, dass sich über die Gesamtlänge der Vorrichtung ein Druckabfall von mindestens 2,5 bar, besser 4,5 bis 5 bar, einstellt.

Für die Verfügbarkeit in Längsrichtung können mehrere Hinderniskörper zu einer Gruppe zusammengefasst und nur gemeinsam in Längsrichtung entlang der zentralen Achse verlagerbar sein, vor allem im Bereich der letzten Hinderniskörper, was den baulichen Aufwand reduziert, die Effizienz aber nur untergeordnet verschlechtert.

### c) Ausführungsbeispiele

Ausführungsformen gemäß der Erfindung sind im Folgenden beispielhaft näher beschrieben. Es zeigen:
- Fig. 1:: den Kavitator als Einzelteil,
- Fig. 2:: die gesamte Vorrichtung, also den Kavitator eingebaut in eine Rohrleitung,
- Fig. 3:: einen Längsschnitt durch einen Teil des Kavitators,
- Fig. 4:: einen Querschnitt durch einen Teil des Kavitators, und
- Fig. 5:: einen Querschnitt durch eine andere Bauform des Kavitators.

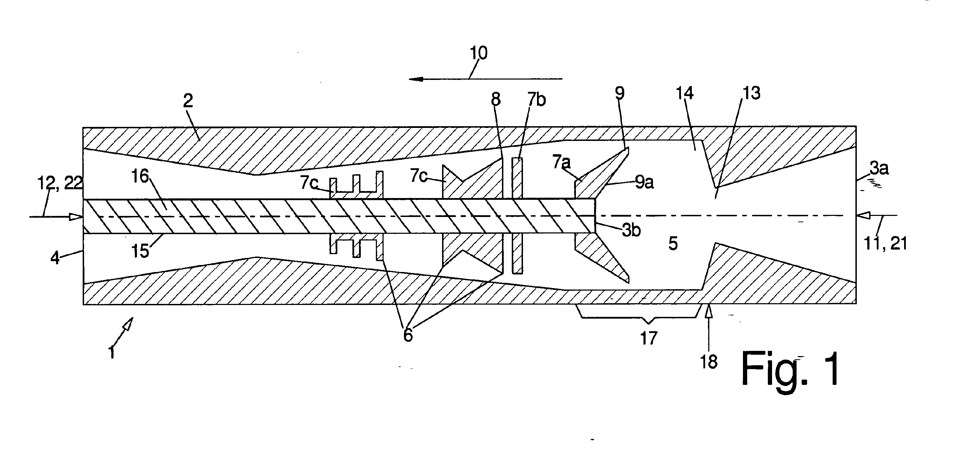

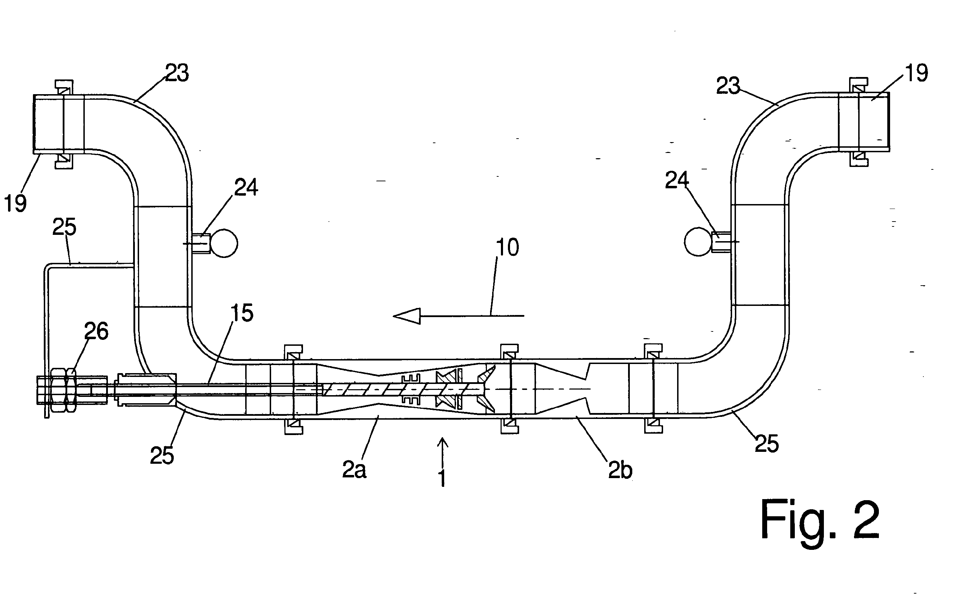

Figur 1 zeigt den eigentlichen Kavitator, der aus einem vorzugsweise rotationssymmetrisch um die Hauptströmungsrichtung 10 ausgebildeten Rohrstück als Gehäuse 2 besteht, welches in Figuren 1 und 2 von der ersten Komponente 21 und damit als Hauptdurchströmungsrichtung 10 von rechts nach links durchströmt wird.

Somit ist die linke offene Stirnseite die Eingangsöffnung 3a für die erste Komponente, die in die Durchflusskammer 5 einströmt und hier zunächst eine konische Querschnittsverengung 13 bis zu deren engster Stelle 18 durchläuft.

Daran schließt sich eine wesentlich schnellere, also kürzere, Querschnittsaufweitung 14 an auf einen freien Durchlass etwa entsprechend den freien Durchlass an der Eingangsöffnung 3a oder etwas größer, jedoch mit einer Aufweitungsstrecke die nur ein 1/5 bis 1/10 der Länge der Verengungsstrecke beträgt.

Daran schließt sich eine Strecke 17 mit konstantem Durchmesser der Durchflusskammer 5 an, auf welche wiederum eine längere Strecke der konusförmigen Abnahme des freien Querschnitts mit anschließender etwa gleich starker Aufweitung erfolgt.

Die Kavitation tritt auf neben den in der Durchflusskammer 5 angeordneten Hinderniskörpern 7a,b,c, von denen der erste noch im Bereich der Strecke 17 mit konstantem Innendurchmesser angeordnet ist und die übrigen in Hauptströmungsrichtung 10 dahinter im Bereich des abnehmenden freien Durchmessers.

Die Hinderniskörper 7 sind auf einer zentralen Achse 15 angeordnet, die von der Seite der Ausgangsöffnung 4 im Zentrum der Durchflusskammer 5 in diese hineinragt und mit dem ersten Hinderniskörper 7a endet.

Indem die zentrale Achse 15 als hohle Rohrleitung 16 ausgebildet ist, dient sie als Zuführung für die zweite Komponente 22, die somit in Strömungsrichtung 12, also im Gegenstrom zur Strömungsrichtung 11 der ersten Komponente, in die Durchflusskammer 5 zugeführt wird und dort in der zweiten Eingangsöffnung 3b, nämlich der Hauptströmungsrichtung 5 entgegengerichteten Frontfläche des ersten Hinderniskörpers 7a, mündet.

Dieser erste Hinderniskörper 7a dient somit für die erste Komponente als Prallplatte 9 mit einer der Strömungsrichtung 11 dieser ersten Komponente konkav entgegengewölbten vorderen Fläche als Prallfläche 9a, an deren tiefstem Punkt die zweite Eingangsöffnung 3b für die zweite Komponente 22 mündet.

Dieser als Prallplatte 9 ausgebildete erste Hinderniskörpers 7a besitzt den größten Querschnitt, während die folgenden Hinderniskörper 7b und 7c einen demgegenüber geringer werdenden Querschnitt aufweisen, vorzugsweise analog zum abnehmenden freien Durchmesser in der Durchflusskammer 5, so dass die radiale Breite des ringförmigen Durchflussspaltes 6 zwischen Hinderniskörper und umgebendem Gehäuse 2 in Strömungsrichtung 10 gleich bleibt oder gar abnimmt.

Die beispielhaft dargestellten Hinderniskörper 7a-d weisen zum Teil mehrere axial beabstandete, ringförmig umlaufende, am weitesten gegen das Gehäuse 2 vor stehende Abrisskanten 8 auf.

Der dritte Hinderniskörper 7c ist zu diesem Zweck im Längsschnitt betrachtet mit einer Ringnut am Außenumfang ausgestattet, die axial vorne und hinten von jeweils einer Abrisskante 8 begrenzt sind und der zwei ebene, zueinander parallele und genau lotrecht zur Axialrichtung liegende Anströmflächen aufweist.

Die Flanken der Ringnuten in den Mantelflächen dieser Hinderniskörper gehen in einen spitzen Winkel in diese Stirnflächen über, so dass Abrisskanten 8 gebildet werden, deren Winkel bei der vordersten Abrisskante, also an der Prallfläche 9a, etwa 45° beträgt und beide Winkel in den Abrisskanten teilweise sogar unter 45° beträgt.

Der vierte Hinderniskörper 7c besteht aus mehreren, in diesem Fall drei, zueinander axial beabstandeten und fest miteinander verbundenen radialen Scheiben mit konstanter Dicke, deren schmalen außen liegende Mantelflächen parallel zur Durchströmungsrichtung 10 und damit lotrecht zur Scheibenebene liegen, während als Hinderniskörper 7b eine einzelne Scheibe dargestellt ist, was die bevorzugte Form von Hindernissen sein wird.

Vorzugsweise sind die Hinderniskörper 7a, b, c jeweils einzeln entlang der zentralen Achse 15 einstellbar, zusätzlich ist die gesamte Achse 15 in Axialrichtung verschiebbar, wie am besten anhand der Figur 2 ersichtlich, die den Einbau des Mischers 1 in eine bestehende Rohrleitung 19 zeigt:
Aus dieser Rohrleitung 19 wird über Rohrbögen 23 zunächst eine Abkröpfung und Versatz parallel zur ursprünglichen Verlaufsrichtung der Rohrleitung 19 hergestellt, einschließlich in Zu- und Abführung zu dem Mischer 1 vorhandenen Sperrventilen 24.

Durch die beiden weiteren Rohrbögen 23', mittels derer wieder in die ursprüngliche, allerdings nun parallel versetzte, Verlaufsrichtung der Rohrleitung 19 übergegangen wird, kann der Kavitator 1 nunmehr parallel zur ursprünglichen Verlaufsrichtung der Rohrleitung 19 zwischen die beiden Rohrbögen 23' montiert werden.

Auf diese Art und Weise kann die gerade verlaufende zentrale Achse 15, die gleichzeitig als Rohrleitung 16 für das Zuführen einer zweiten Komponente dienen kann, durch die Außenwandung des einen Rohrbogens 23' herausgeführt werden und dort gegenüber einer Stütze 23' abgestützt und mittels z. B. Verschraubung und Kontermutter 26 axial verstellt werden.

Figur 2 zeigt, dass der freie Querschnitt an der Eingangsöffnung 3a sowie an der Ausgangsöffnung 4 mit dem freien Querschnitt der übrigen Rohrleitung 19 übereinstimmt, und dass das Gehäuse 2 des Kavitators zweiteilig ausgebildet ist, indem der eine Teil 2a der Gehäuseteil ist, in dem sich die Hinderniskörper 7 befinden und der andere Gehäuseteil 2b derjenige, der in Durchflussrichtung vor dem Hinderniskörper die Querschnittsverengung und anschließende Querschnittsaufweitung enthält.

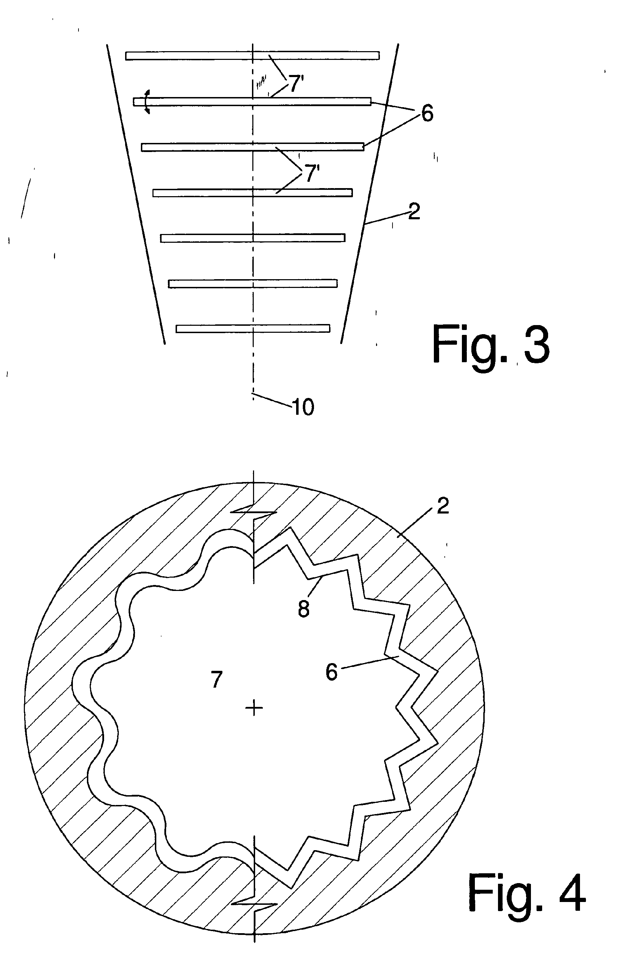

Figur 3 zeigt eine spezielle Bauform der Hinderniskörper 7 in Form von vorzugsweise einzelnen, jedoch zumindest am Außenumfang dünnen Scheiben 7'.

Deren Dicke ist relativ zu ihrer Materialelastizität so ausgelegt, dass sie zumindest an ihrem freien äußeren Rand in und gegen die Durchströmungsrichtung 10 flexibel schwingen können, wodurch das Eintreten des Kavitationseffektes beschleunigt wird. Zu diesem Zweck sind die Scheiben 7' im Zentrum gehalten und gegebenenfalls die Scheiben in der Höhe der freien umlaufenden Kanten dünner als der Rest ausgebildet.

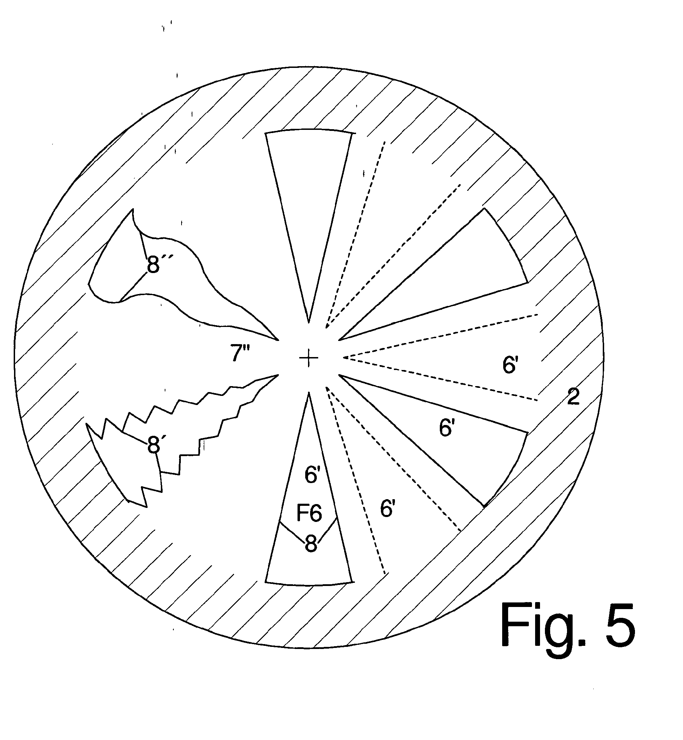

Die Figuren 4 und 5 zeigen spezielle Lösungen zur Gestaltung des Durchflussspaltes 6:
Bei Figur 4 wird analog der Figuren 1 und 2 davon ausgegangen, dass der Durchfluss-Spalt 6 ein ringförmig umlaufender Spalt zwischen dem inneren Hinderniskörper 7 und den radial außen, den Hinderniskörper 7 umgebendem, Gehäuse 2, ist.

Zur Verlängerung der Abrisskante 8, also der umlaufenden Außenkante des Hinderniskörpers 7 und damit Verbesserung der Kavitationswirkung zeigt Figur 4, wie in Längsrichtung betrachtet eine Verlängerung erreicht werden kann durch gewellte oder gezackte Ausführung der Abrisskante 8. Wenn der Durchflussspalt 6 über den Umfang gleich breit bleiben soll, ist auch die Innenkontur des Gehäuses 2 analog gestaltet.

Figur 5 zeigt dagegen eine Lösung, bei der Durchflussspalt 6' kein ringförmig umlaufender Spalt zwischen dem Hinderniskörper 7" und dem Gehäuse 2 ist:
Vielmehr ist der Hinderniskörper 7" an seinem Außenumfang teilweise mit dem Gehäuse 2 verbunden, jedoch weist der Hinderniskörper 7" vom äußeren Rand nach innen bis fast ins Zentrum mehrere, etwa radial verlaufende DurchflussSpalte 6' auf, die sich radial von innen nach außen beispielsweise erweitern können. Diese etwa radial verlaufenden Abrisskanten 8 können gerade ausgebildet sein und genau radial verlaufen, oder auch gezackt (Abrisskante 8') oder auch gewellt (Abrisskante 8") ausgebildet sein.

Um die Kavitation zu verstärken, können die Durchflussspalte 6' der einzelnen axial hintereinander liegenden Hinderniskörper in Umfangsrichtung zueinander versetzt angeordnet sein, wie in der rechten Bildhälfte der Figur 5 angedeutet.

Die Flächen F₆ der Durchflussspalte 6 ändern sich dabei in der Strömungsrichtung 10 von einem Hinderniskörper zum nächsten gezielt und werden geringer indem die z. B. Öffnungswinkel dieser Segmentförmigen Durchflussspalte 6 in der Strömungsrichtung immer kleiner werden und/oder aufgrund der Verringerung des Innendurchmessers der Durchflusskammer, also des Gehäuses 2.

### BEZUGSZEICHENLISTE

- 1: Kavitator
- 1': Stabilisator
- 2: Gehäuse
- 3a,b: Eingangsöffnung
- 4: Ausgangsöffnung
- 5: Durchflusskammer
- 6,6': Durchfluss-Spalt
- 7,7': Hinderniskörper
- 8: Abrisskante
- 9: Prallplatte
- 9a: Prallfläche
- 10: Hauptströmungsrichtung
- 11: Strömungsrichtung 1. Komponente
- 12: Strömungsrichtung 2. Komponente
- 13: Querschnittsverengung
- 14: Querschnittsaufweitung
- 15: zentrale Achse
- 16: Rohrleitung
- 17: Strecke konstanten Durchmessers
- 18: engste Stelle
- 19: Rohrleitung
- 20: Gemisch
- 21: 1. Komponente
- 22: 2. Komponente
- 23, 23': Rohrbogen
- 24: Sperrventil
- 25: Stütze
- 26: Kontermutter

## Patentansprüche

1. Verfahren zum Zerstören der in einem fließfähigen Medium enthaltenen Mikroorganismen, indem mittels hydrodynamischer Kavitation in dem strömenden Medium, mehrfach hintereinander Gasblasen erzeugt und zum Platzen gebracht werden mittels einer Vorrichtung, die umfasst
- ein Gehäuse (2),
- wenigstens eine Eingangsöffnung (3a, b)
- eine Ausgangsöffnung (4) für die Austragung,
- eine Durchflusskammer (5) zwischen Eingangsöffnung (3a, b) und Ausgangsöffnung (4) mit in der Durchflusskammer (5) angeordneten, mehreren, insbesondere plattenförmigen Hinderniskörpern (7), deren Ebene quer zur Hauptströmungsrichtung (10) liegt, und
- Durchflussspalten (6) zwischen den scharfen Abrisskanten (8) der Hinderniskörper (7) und dem umgebenden Gehäuse (2),
- wobei die Flächen der Durchflussspalte (6) gemessen quer zur Hauptströmungsrichtung in Hauptströmungsrichtung (10) abnehmen,
- in Strömungsrichtung (11) nach der Eingangsöffnung (3a, b) zunächst eine insbesondere konusförmige Querschnittsverengung (13) und anschließend eine insbesondere konusförmige Querschnittsaufweitung (14) noch vor dem ersten Hinderniskörper (7a) vorhanden ist,
- die Hinderniskörper axial verstellbar sind, und
- eine Strecke mit konstantem Querschnitt zwischen der Querschnittsaufweitung (14) und den Hinderniskörpern vorhanden ist.

2. Verfahren nach einem der vorhergehenden Ansprüche
**dadurch gekennzeichnet, dass**
bei der Vorrichtung
- der erste Hinderniskörper (7a) als Prallplatte (9) ausgebildet ist, und/oder insbesondere
- die Vorrichtung so dimensioniert ist, dass sie einen Druckabfall über eine Gesamtlänge von mindestens 2,5 bar, besser 4,5 bis 5 bar, erzeugt, und/oder insbesondere
- die Prallplatte (9) auf der der Hauptströmungsrichtung (10) entgegengerichteten Prallseite konkav ausgebildet ist, und/oder insbesondere
- zwischen der Querschnittsaufweitung (14) und der Prallplatte (9) eine Strecke (17) konstanten Querschnitts angeordnet ist.

3. Verfahren nach einem der vorhergehenden Ansprüche
**dadurch gekennzeichnet, dass**
- die Ausgangsöffnung (4) aus dem in Hauptströmungsrichtung (10) gerichteten Gehäuse (2) radial herausführt, und/oder insbesondere
- die Hinderniskörper (7) relativ zueinander axial verstellbar sind und insbesondere auch zur zentralen Achse (15) axial verstellbar sind, und/oder insbesondere
- die plattenförmigen Hinderniskörper so dimensioniert sind, dass sie in Strömungsrichtung schwingen können.

4. Verfahren nach einem der vorhergehenden Ansprüche
**dadurch gekennzeichnet, dass**
- der Durchflussspalt (6) sich zwischen dem Außenumfang der plattenförmigen Hinderniskörper und dem umgebenden Gehäuse (2) befindet, und/oder insbesondere
- die plattenförmigen Hinderniskörper (7) radial außen mit dem Gehäuse (2) verbunden sind und innerhalb ihres Umfanges Segmente zum Durchströmen frei bleiben, und/oder insbesondere
- die Abrisskanten (8) der Hinderniskörper (7) eine möglichst große Verlaufslänge aufweisen und insbesondere gewellt oder gezackt ausgebildet sind, betrachtet entweder in axialer Richtung oder quer zur axialen Richtung, und/oder insbesondere
- bei gewellter oder gezackter Abrisskante (8) betrachtet in axialer Richtung die Innenkontur des umgebenden Gehäuses (2) eine analog gewellte oder gezackte Kontur aufweist.

5. Verfahren nach einem der vorhergehenden Ansprüche
**dadurch gekennzeichnet, dass**
- die Querschnittsverengung (13) nach der Eingangsöffnung (3a, b) so bemessen ist, dass die Fließgeschwindigkeit am Beginn der Querschnittsverengung der Fließgeschwindigkeit am letzten Hinderniskörper (7) entspricht, und/oder insbesondere
- die Querschnittsverengung (13) nach der Eingangsöffnung (3a, b) so bemessen ist, dass die Fließgeschwindigkeit (v) an der engsten Stelle der Querschnittseinschnürung etwas höher ist, insbesondere zwischen 5% und 20% höher ist, als die Fließgeschwindigkeit (v) beim letzten Hinderniskörper, und/oder insbesondere
- die Hinderniskörper (7') runde Scheiben sind mit in Hauptströmungsrichtung (10) abnehmendem Durchmesser und insbesondere die Gehäusewandung in immer dem gleichen radialen Abstand zu den radialen Außenkanten der Scheiben verläuft, und/oder insbesondere
- die Hinderniskörper Scheiben mit gleich bleibendem Durchmesser sind, insbesondere identische Scheiben sind, und der radiale Abstand des äußeren Randes der Scheiben zum Gehäuse (2) in Haupt-Durchflussrichtung abnimmt.

6. Verfahren nach einem der vorhergehenden Ansprüche
**dadurch gekennzeichnet, dass**
- die Querschnittsverengung (13) nach der Eingangsöffnung (3a, b) so stark ist, dass sich die Fließgeschwindigkeit (v) um den Faktor 9 bis 13, insbesondere um den Faktor 10 bis 12, insbesondere um den Faktor 10,5 bis 11,5, erhöht, und/oder insbesondere
- die Hinderniskörper (7) so zueinander und/oder zu dem umgebenden Gehäuse (2) positioniert und dimensioniert werden, dass sich die Fließgeschwindigkeit (v) im Durchflussspalt (6) des in Strömungsrichtung letzten Hinderniskörpers verglichen zu dem im Durchgangsspalt des ersten Hinderniskörpers um den Faktor 1,8 bis 2,5, insbesondere 2,0 - 2,3, erhöht, und/oder insbesondere
- die Scheiben relativ zueinander und zum umgebenden Gehäuse (2) so positioniert und dimensioniert werden, dass sich die Fließgeschwindigkeit (v) im jeweiligen Durchgangsspalt von dem einen Hinderniskörper (7) zum nächsten in Fließrichtung (v) jeweils um den Faktor 1,1 bis 1,4 zunimmt, und/oder insbesondere
- die Anzahl der Hinderniskörper (7) zwischen 3 und 10, insbesondere zwischen 5 und 7, beträgt.

7. Verfahren nach einem der vorhergehenden Ansprüche
**dadurch gekennzeichnet, dass**
- die axiale Dicke der Scheiben zwischen 1 und 4 mm, insbesondere zwischen 2 und 3 mm, beträgt, und/oder insbesondere
- der axiale Abstand von Mitte zu Mitte zweier benachbarter Scheiben das zweifache bis siebenfache, insbesondere das dreifache bis fünffache, der Scheibendicke beträgt, und/oder insbesondere
- die radiale Breite des Ringspaltes zwischen den plattenförmigen Hinderniskörpern (7) und ihrem Gehäuse 1 bis 5 mm, insbesondere 1,5 - 3,8 mm, beträgt.

8. Verfahren nach einem der vorhergehenden Ansprüche
**dadurch gekennzeichnet, dass**
- der innere freie Durchmesser nach der Querschnittsaufweitung (14) und vor der ersten Prallplatte (9) dem 0,9- bis 1,1-fachen des freien Querschnittes der zu- und/oder abführenden Rohrleitung (16) entspricht, und/oder insbesondere
- der freie Querschnitt nach der Querschnittsaufweitung (14) und vor der Prallplatte (9) dem 1,0- bis 2,0-fachen des freien Durchmessers der zu- und/oder abführenden Rohrleitung (16) beträgt, und/oder insbesondere
- wenigstens der erste und gegebenenfalls auch der zweite Hinderniskörper (7) eine wesentlich größere axiale Erstreckung als die übrigen plattenförmigen Hinderniskörper (7) aufweisen und auf ihrem Außenumfang eine ringförmig konkave Einbuchtung aufweisen, so dass sie jeweils zwei ringförmig umlaufende Abrisskanten (8) besitzen, und/oder insbesondere
- die Abrisskanten (8) im Querschnitt einen Winkel von kleiner 60°, insbesondere kleiner 50°, insbesondere kleiner 45°, aufweisen.

9. Verfahren nach einem der vorhergehenden Ansprüche
**dadurch gekennzeichnet, dass**
- mehrere plattenförmige Hinderniskörper (7) zu einer Gruppe zusammengefasst nur gemeinsam in Längsrichtung entlang der zentralen Achse (15) verlagerbar sind, und/oder insbesondere
- der erste Hinderniskörper (7) mit seiner in Strömungsrichtung ersten Abrisskante (8) noch im Bereich des konstanten Innendurchmessers des Gehäuses (2) liegt und die zweite Abrisskante (8) bereits im axialen Bereich des sich verjüngenden Innendurchmessers des Gehäuses (2), und/oder insbesondere
- die Vorrichtung so dimensioniert ist, dass sie einen Druckabfall über eine Gesamtlänge von 2,5 bis 3 bar erzeugt, und/oder insbesondere
- die scheibenförmigen Hinderniskörper (7) bei einer Dicke von weniger als weniger als 3 mm eine parallel zur Längsachse oder parallel zur Gehäusewandung verlaufende, gerade Mantellinie an ihrem äußeren Rand aufweist.

## Claims

1. A method to destroy the microorganisms comprised in a flow capable medium by generating gas bubbles multiple times in sequence and making them burst by means of hydrodynamic cavitation in the flowing medium by means of a device comprising the following:
- a housing (2);
- at least one inlet opening (3a, b);
- an outlet opening (4) exhausting;
- A flow through chamber (5) between the inlet opening (3a, b) and the outlet opening (4) with plural, in particular plate shaped obstacle bodies (7), disposed in the flow through chamber (5), wherein the plane of the obstacle bodies is disposed transversal to the main flow direction (10); and
- flow through gaps (6) between the sharp separation edges (8) of the obstacle bodies (7) and the surrounding housing (2), wherein
- the surfaces of the flow through gaps (6) measured transversal to the main flow direction decrease in the main flow direction (10);
- in flow direction (11) after the inlet opening (3a, b), initially in particular a cone shaped cross section contraction (13) and subsequently in particular a cone shaped cross section expansion (14) is provided still before the first obstacle body (7a);
- the obstacle bodies are axially adjustable; and
- a section with constant cross section is provided between the cross section expansion (14) and the obstacle bodies.

2. A method according to one of the preceding claims, wherein
- the first obstacle body (7a) is provided as an impact plate (9), and/ or in particular;
- the device is sized so that it generates a pressure drop over its total length of at least 2.5 bar, better 4.5 to 5 bar, and/ or in particular;
- the impact plate (9) is concave on the impact side facing against the main flow direction (10), and/or in particular;
- a section with constant cross section (17) is located between the cross section expansion (14) and the impact plate (9)
in the device.

3. A method according to one of the preceding claims, wherein
- the outlet opening (4) leads radially out of the housing (2), arranged in main flow direction, and/or in particular;
- the obstacle bodies (7) are axially adjustable relative to each other and are in particular also axially adjustable relative to the central axis (15), and/or in particular;
- the plate shaped obstacle bodies are sized, so that they can oscillate in flow direction.

4. A method according to one of the preceding claims, wherein
- the flow through gap (6) is located between the outer circumference of the plate shaped obstacle bodies and the surrounding housing (2), and/or in particular;
- the plate shaped obstacle bodies (7) are connected on their radially outside with the housing (2), providing open segments within their circumference for flow through, and/or in particular
- the separation edges (8) of the obstacle bodies (7) have an extension as long as possible, in particular they are undulated or serrated, viewed either in axial direction, or perpendicular to the axial direction, and/or in particular
- when the undulated or serrated separation edge (8) can be viewed in axial direction, the surrounding housing (2) has an analogous undulated or serrated contour.

5. A method according to one of the preceding claims, wherein
- the cross section contraction (13) after the intake opening (3a,b) is sized, so that the flow velocity at the beginning of the cross section contraction corresponds to the flow velocity at the last obstacle body (7), and/or in particular
- the cross section contraction (13) after the intake opening (3a,b) is sized, so that the flow velocity (v) at the tightest location of the cross section contraction is slightly higher, in particular between 5% and 20% higher than the flow velocity (v) at the last obstacle body, and/or in particular
- the obstacle bodies (7') are round discs with a diameter decreasing in main flow direction (10) and in particular the housing wall always extends at the same radial distance from the radially outer edges of the discs, and/or in particular
- the obstacle bodies are discs with constant diameter, in particular identical discs, and the radial distance between the outer edges of the discs and the housing (2) decreases in main flow direction.

6. A method according to one of the preceding claims, wherein
- the cross section contraction (13) after the intake opening (3a, b) is strong enough, so that the flow velocity (v) increases by a factor of 9 to 13, in particular by a factor of 10 to 12, in particular by a factor of 10.5 to 11.5, and/or in particular
- the obstacle bodies (7) are positioned and sized relative to each other and/or relative to the surrounding housing (2), so that the flow velocity (v) in the flow through gap (6) of the last obstacle body, seen in flow direction is increased relative to the flow velocity in the flow through gap of the first obstacle body, by a factor of 1.8 to 2.5, in particular 2.0 to 2.3, and/or in particular
- the discs are positioned relative to each other and relative to the surrounding housing (2), so that the flow velocity (v) in the respective flow through gap increases from one obstacle body (7) to the next in flow direction (v) respectively by a factor of 1.1 to 1.4, and/or
- the number of the obstacle bodies (7) is between 3 and 10, in particular between 5 and 7.

7. A method according to one of the preceding claims, wherein
- the axial thickness of the discs is between 1 mm and 4 mm, in particular between 2 mm and 3 mm, and/or in particular
- the axial distance from the center to the center of two adjacent discs is two times to seven times, in particular three times to five times the thickness of the disc, and/or in particular
- the radial width of the annular gap between the plate shaped obstacle bodies (7) and their housing is 1 mm to 5 mm, in particular 1.5 mm to 3.8 mm.

8. A method according to one of the preceding claims, wherein
- the interior free diameter after the cross section expansion (14) and in front of the first impact plate (9) is 0.9 to 1.1 times the free cross section of the in feeding and/or exhausting conduit (16), and/or in particular
- the free cross section after the cross section expansion (14) and in front of the impact plate (9) is 1.0 to 2.0 times the free diameter of the in feeding and/or exhausting conduit (16), and/or in particular
- at least the first, and possibly also the second obstacle body (7) has a much larger axial extension than the remaining plate shaped obstacle bodies (7), comprising an annular concave indentation on their outer circumference, so that each of them has two annular circumferential separation edges (8), and/or in particular
- the separation edges (8) have an angle of less than 60°, in particular less than 50°, in particular less than 45° in cross section.

9. A method according to one of the preceding claims, wherein
- several plate shaped obstacle bodies (7) are combined into a group and are only adjustable together in longitudinal direction along the central axis (15), and/or in particular
- the first obstacle body (7) with its first separation edge (8) in flow direction is still located in the area of constant interior diameter of the housing (2) and the second separation edge (8) is already located in the axial section of the decreasing interior diameter of the housing (2); and/or in particular
- the device is sized, so that it creates a pressure drop of 2.5 to 3 bar over its entire length, and/or in particular
- the disc shaped obstacle body (7) with a **thickness of less than 3 mm have straight enveloping lines at their** outer circumferences, **which enveloping lines extend** parallel to the longitudinal axis or parallel to the wall of the housing.

## Revendications

1. Procédé pour la destruction des microorganismes contenus dans un fluide coulant, dans le fait qu'au moyen de la cavitation hydrodynamique dans le fluide en écoulement, de préférence plusieurs fois les uns derrière les autres, il est généré des bulles de gaz que l'On fait éclater, au moyen d'un dispositif qui comprend
- un coffret (2)
- au moins une ouverture d'entrée (3a, b)
- une ouverture de sortie (4) pour l'évacuation
- une chambre d'écoulement (5) entre l'ouverture d'entrée (3a, b9 et l'ouverture de sortie (4) et plusieurs corps d'obstacle (7) disposés dans la chambre d'écoulement (5) en particulier en forme de plaque, dont le plan est transversal à la direction principale de courant (10) et
- des fentes d'écoulement (6) entre les bords vifs d'arrachage (8) des corps d'obstacle (7) et le coffret environnant (2),
- les surfaces de la fente d'écoulement (6) diminuent dans la direction principale de courant mesurée transversalement à la direction principale d'écoulement (10),
- dans la direction de courant (11) après l'ouverture d'entrée (3a, b) il est prévu tout d'abord un rétrécissement de section transversale conique (13) et ensuite un élargissement de section transversale conique (14) avant le premier corps d'obstacle (7a),
- les corps d'obstacle étant réglables axialement et
- un trajet avec une section transversale constante se trouvant entre l'élargissement de section transversale (14) et les corps d'obstacle.

2. Procédé selon l'une des revendications précédentes, **caractérisé en ce que** sur le dispositif
- le premier corps d'obstacle (7a) est réalisé comme une plaque d'impact (9) et/ou en particulier
- le dispositif est dimensionné de sorte qu'une chute de pression d'au moins 2,5 bars de préférence 4,5 bars est générée sur une longueur totale et/ou en particulier
- la plaque d'impact (9) est réalisée concave sur la face d'impact opposée à la direction principale de courant (10) et/ou en particulier
- entre l'élargissement de section transversale (14) et la plaque d'impact (9) il est placé un trajet (17) de section transversale constante.

3. Procédé selon l'une des revendications précédentes, **caractérisé en ce que**
- l'ouverture de sortie (4) sort radialement du coffret (2) dirigé dans la direction principale de courant (10) et/ou en particulier
- les corps d'obstacle (7) sont réglables axialement les uns par rapport aux autres et sont également réglables également axialement par rapport à l'axe central (15) et/ou en particulier
- les corps d'obstacle en forme de plaque sont dimensionnés de sorte qu'ils peuvent s'agiter dans la direction de courant.

4. Procédé selon l'une des revendications précédentes, **caractérisé en ce que**
- la fente d'écoulement (6) se trouve entre la périphérie externe du corps d'obstacle en forme de plaque et le coffret environnant (2) et/ou en particulier
- les corps d'obstacles en forme de plaque (7) sont reliés radialement avec l'extérieur au coffret (2) et des segments pour l'écoulement restent libres à l'intérieur de leur périphérie et/ou en particulier
- les bords d'arrachages (8) des corps d'obstacle (7) présentent une longueur la plus grande possible et sont réalisés en particulier ondulés ou dentelés, observé soit dans le sens axial soit transversalement au sens axial et/ou en particulier
- pour des bords d'arrachage ondulés ou dentelés (8), observé dans le sens axial, le contour interne du coffret environnant (2) présente un contour ondulé ou dentelé de manière analogue

5. Procédé selon l'une des revendications précédentes, **caractérisé en ce que**
- le rétrécissement de section transversale (13) est mesuré après l'ouverture d'entrée (3a, b) de sorte que la vitesse d'écoulement correspond au début du rétrécissement de section transversale à la vitesse d'écoulement au dernier corps d'obstacle (7) et/ou ne particulier
- le rétrécissement de section transversale (13) est mesuré après l'ouverture d'entrée (3a, b) de sorte que la vitesse d'écoulement (v) est un peu plus élevée à l'endroit le plus étroit de l'étranglement de section transversale en particulier entre 5 et 20 % que la vitesse d'écoulement (v) au niveau du dernier corps d'obstacle et/ou en particulier
- les corps d'obstacle (7') sont des disques ronds avec un diamètre décroissant en dans la direction d'écoulement principal (10) et en particulier la paroi de coffret s'étend dans la même distance radiale par rapport aux bords externes radiaux des disques et/ou en particulier
- les corps d'obstacle sont des disques de diamètre constant en particulier sont des disques identiques et la distance radiale entre le bord externe des disques et le coffret (2) diminue dans la direction principale d'écoulement.

6. Procédé selon l'une des revendications principales, **caractérisé en ce que**
- le rétrécissement de section transversale (13) après l'ouverture d'entrée (3a, b) est si fort que la vitesse d'écoulement (v) augmente d'un facteur 9 à 13, en particulier du facteur 10 à 12, en particulier du facteur 10,5 à 11,5 et/ou en particulier
- les corps d'obstacle (7) sont positionnés et dimensionnés les uns par rapport aux autres et/ou par rapport au coffret environnant (2) de sorte que la vitesse d'écoulement (v) est augmentée dans la fente d'écoulement (6) du dernier corps d'obstacle dans la direction de courant du facteur 1,8 à 2,5 en particulier 2,0 à 2,3 comparé à la fente de passage du premier corps d'obstacle, et/ou en particulier
- les disques sont dimensionnés et positionnés de manière relative entre eux et par rapport au coffret environnant (2) de sorte que la vitesse d'écoulement (v) augmente d'un facteur 1,1 à 1,4 dans la fente de passage d'un corps d'obstacle (7) au corps d'obstacle suivant dans le sens d'écoulement (v) et/ou en particulier
- le nombre des corps d'obstacle (7) est compris entre 3 et 10, en particulier entre 5 et 7.

7. Procédé selon l'une des revendications précédentes, **caractérisé en ce que**
- l'épaisseur axiale des disques est comprise entre 1 et 4 mm, en particulier entre 2 et 3 mm et/ou en particulier
- l'écart axial entre les deux milieux de disques voisins est de deux à sept fois en particulier de trois à cinq fois l'épaisseur de disque et/ou en particulier
- la largeur radiale de la fente annulaire entre les corps d'obstacles en forme de plaque (7) et leur coffret est comprise entre 1 à 5 mm, en particulier 1,5 à 3,8 mm.

8. Procédé selon l'une des revendications précédentes, **caractérisé en ce que**
- le diamètre interne libre après l'élargissement de section transversale (14) et avant la première plaque d'impact (9) correspond à 0,9 à 1,1 fois de la section transversale libre de la conduite d'amenée ou d'évacuation (16) et/ou en particulier
- le section transversale libre après l'élargissement de section transversale (14) et avant la première plaque d'impact (9) correspond à 1,0 à 2,0 fois du diamètre libre de la conduite d'amenée ou d'évacuation (16) et/ou en particulier
- au moins le premier corps d'obstacle et éventuellement le second corps d'obstacle (7) présente une extension axiale sensiblement plus grande que les autres corps d'obstacle en forme de plaque (7) et présentent sur leur périphérie externe un retrait circulaire et concave de sorte qu'ils possèdent deux bords d'arrachage circulaires (8) et/ou en particulier
- les bords d'arrachage (8) présentent en section transversale un angle inférieur à 60°, en particulier inférieur à 50°, en particulier inférieur à 45°.

9. Procédé selon l'une des revendications précédentes, **caractérisé en ce que**
- plusieurs corps d'obstacle en forme de plaque (7) sont rassemblés en un groupe qui ne peut être déplacé qu'en commun dans la direction longitudinale le long de l'axe central (15) et/ou en particulier
- le premier corps d'obstacle (7) se trouve avec son premier bord d'arrachage (8) dans la direction de courant encore dans la zone du diamètre interne constant du coffret (2) et le second bord d'arrachage (8) se trouve déjà dans la zone axiale du diamètre interne se rétrécissant du coffret (2) et/ou en particulier
- le dispositif est dimensionné de sorte qu'il génère une chute de pression de 2,5 à 3 bars sur une longueur totale et/ou en particulier
- les corps d'obstacle en forme de disques (7) présentent pour une épaisseur inférieure à 3 mm une génératrice rectiligne s'étendant parallèlement à la paroi de coffret sur son bord externe.
